# EUROPEAN PATENT SPECIFICATION

(11) **EP 2 333 442 B1**
(45) Date of publication and mention of the grant of the patent: **04.01.2017**
(21) Application number: 10008764.2
(22) Date of filing: 23.08.2010
(51) Int. Cl.: F24F 11/00

(54) **Air conditioner controller**
Klimagerät Steuereinrichtung
Dispositif de commande pour appareil de climatisation

(30) Priority: 27.11.2009 JP 2009269963
(43) Date of publication of application: 15.06.2011
(73) Proprietor: Mitsubishi Electric Corporation, Tokyo 100-8310 (JP)
(72) Inventor: Kaneoya, Shinya, Chiyoda-ku Tokyo 100-8310 (JP); Kaneko, Toru, Chiyoda-ku Tokyo 100-8310 (JP)
(74) Representative: Pfenning, Meinig & Partner mbB

(56) References cited:
- EP-A1- 1 944 558
- EP-A1- 2 042 816
- EP-A2- 1 429 082
- EP-A2- 2 058 598
- JP-A- S58 106 342
- JP-A- 2004 279 000
- US-A- 4 217 646

## Description

### BACKGROUND OF THE INVENTION

### 1. Field of the Invention

The present invention relates to an air conditioner controller that controls a plurality of air conditioners.

### 2. Description of the Related Art

In prior-art techniques, an "air-conditioning control system provided with a schedule setting information changing means that changes schedule setting information including the range of set temperatures and an operation mode in accordance with the setting of restriction conditions of a previously set schedule with respect to the settings including the operation mode, the set temperature and the permission or prohibition of manual operation among the schedule settings for indoor units, which are set by schedule setting means" is proposed, for example (See Japanese Unexamined Patent Application Publication No. 2002-286280 (claim 1), for example).

Also, a system for air conditioning, considering room temperature at the start of air conditioning and a pre-heat time from the start of air conditioning until a set temperature is reached is disclosed (See Japanese Unexamined Patent Application Publication No. 1990-244952 (page 2, Figs. 4 and 5), for example)

In the prior-art technique, by setting operation contents together with time in schedule management, devices to be operated in the air conditioner are made to perform the set contents of the operations at a set time.

However, since the air-conditioning control is executed on the basis of a value of a specific temperature sensor among a plurality of temperature sensors, there are problems in that a usage state (staff, contents of work, equipment exhaust heat, used hours and the like) and a building environment (solar insolation, ceiling height and the like) with respect to time are not considered, air-conditioning control in accordance with a thermal load condition of a space (room) to be air-conditioned cannot be made, and the degree of comfort is lowered. An air conditioner controller that controls a plurality of air conditioners is also known from US 4 217 646 A.

### SUMMARY OF THE INVENTION

The present invention was made in order to solve the above problems and an object thereof is to obtain an air conditioner controller in which a temperature sensor to be detected can be selected from a plurality of temperature sensors in accordance with at least one of time, date, and day set in a scheduled operation.

An air conditioner controller according to the present invention is an air conditioner controller that controls a plurality of air conditioners according to claim 1.

The present invention stores the selection information on a temperature sensor to be detected selected among the plurality of temperature sensors in accordance with at least one of time, date, and day and controls the plurality of air conditioners on the basis of the temperature information of the temperature sensor selected on the basis of the selection information and the information on the temperature setting of the operation setting information.

Therefore, the temperature sensor to be detected can be selected from the plurality of temperature sensors in accordance with at least one of the time, date, and day set in the scheduled operation. As a result, air-conditioning control in accordance with a thermal load condition of a space to be air-conditioned can be performed, and the degree of comfort can be improved.

### BRIEF DESCRIPTION OF THE DRAWINGS

Fig. 1 is a diagram illustrating a system configuration of an air conditioner in Embodiment 1;
Fig. 2 is a diagram illustrating a configuration of an air-conditioning controller in Embodiment 1;
Fig. 3 is an operation flowchart of the air-conditioning controller in Embodiment 1; and
Fig. 4 is a diagram illustrating a configuration of a hot-water supply cooling/heating system in Embodiment 2.

### DESCRIPTION OF THE PREFERRED EMBODIMENTS

### Embodiment 1

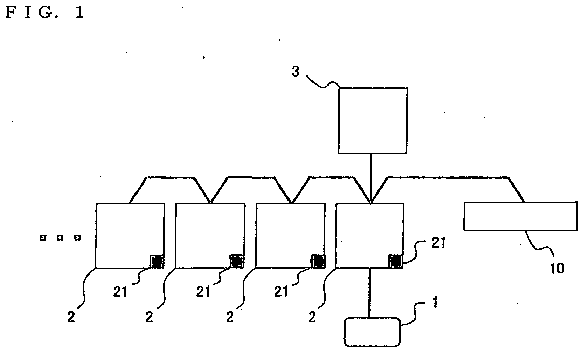

Fig. 1 is a diagram illustrating a system configuration of an air conditioner in Embodiment 1.

As shown in Fig. 1, the system of the air conditioner in this embodiment includes a remote controller 1, a plurality of indoor units 2, an outdoor unit 3, and an air-conditioning controller 10.

The outdoor unit 3 and the plurality of indoor units 2 are connected by a refrigerant pipeline and perform air conditioning of a space to be air-conditioned in which the indoor units 2 are arranged by a refrigerating cycle that absorbs/radiates heat of the refrigerant by changing the pressure of the refrigerant flowing through the refrigerant pipeline.

The "air-conditioning controller 10" corresponds to the "controller of the air conditioner" in the present invention.

Also, the indoor unit 2 and the outdoor unit 3 correspond to the "air conditioner" in the present invention.

The air-conditioning controller 10 controls operations of the plurality of indoor units 2 and the outdoor unit 3 in a centralized manner on the basis of setting information of a scheduled operation, which will be described later.

The air-conditioning controller 10 is connected to each of the indoor units 2 and the outdoor unit 3 through a transmission wire for communication, for example.

The air-conditioning controller 10 transmits control data or the like for controlling an operation state to each of the indoor units 2 and the outdoor unit 3. Also, the air-conditioning controller 10 receives various data such as an operation state from each of the indoor units 2 and the outdoor unit 3.

The connection between the air-conditioning controller 10 and each of the indoor units 2 as well as the outdoor unit 3 is not limited to wired connection and may be wireless connection.

The indoor unit 2 is provided with a heat exchanger on the used unit side, a fan on the indoor unit side and the like, not shown.

The indoor unit 2 controls an operation of each means configuring the indoor unit 2 on the basis of the control data and the like from the remote controller 1 or the air-conditioning controller 10.

Also, each of the indoor units 2 includes a temperature sensor 21 that detects a temperature of air sucked from the space to be air-conditioned (indoor) in which the indoor unit 2 is arranged (hereinafter referred to as "indoor temperature").

Each of the indoor units 2 can transmit at least information of the indoor temperature to the air-conditioning controller 10.

The outdoor unit 3 is connected to each of the indoor units 2 through the refrigerant piping and performs air conditioning by absorbing / radiating heat of the refrigerant by changing the pressure of the refrigerant flowing through the piping.

The outdoor unit 3 includes a compressor that compresses the refrigerant, a heat exchanger on the heat source side arranged outside the space to be air-conditioned, a fan on the outdoor unit side, an expansion valve as throttling means, a four-way valve and the like.

The outdoor unit 3 controls operation of each means configuring the outdoor unit 3 on the basis of control data from the remote controller 1 or the air-conditioning controller 10 and the like.

The remote controller 1 is connected to each of the indoor units 2 by the transmission wire for communication.

The remote controller 1 is capable of operation control of an operation start / stop, an operation mode, a set temperature and the like of each of the indoor units 2.

In this embodiment, a system configured by a single unit of the outdoor unit 3 and a plurality of the indoor units 2 connected thereto is shown as an example, but the present invention is not limited to that. The system configuration may be such that a plurality of the outdoor units 3 are provided and one or a plurality of the indoor units 2 are connected to them.

In this Embodiment 1, the configuration including the remote controller 1 and the air-conditioning controller 10 is explained, but the present invention is not limited to this. It may also be so configured that the remote controller 1 incorporates the function of the air-conditioning controller 10 so as to configure the controller of the air conditioner of the present invention, for example.

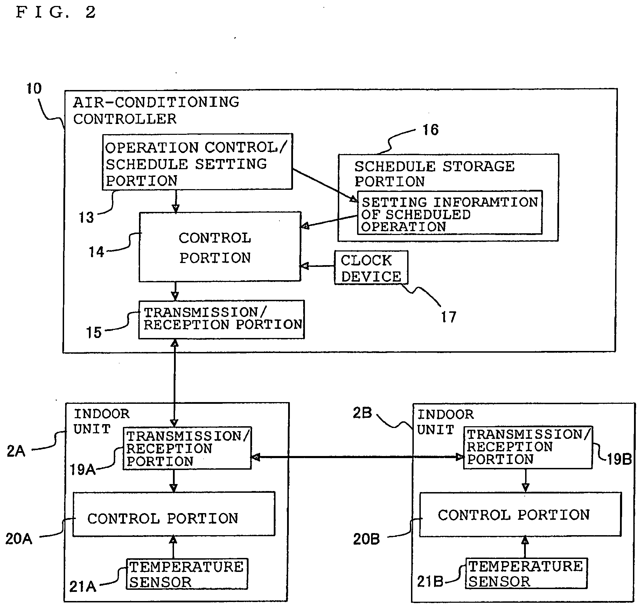

Fig. 2 is a diagram illustrating a configuration of the air-conditioning controller in Embodiment 1.

As shown in Fig. 2, the air-conditioning controller 10 includes an operation control/schedule setting portion 13, a control portion 14, a transmission/reception portion 15, a schedule storage portion 16, and a clock device 17.

Also, each of the indoor units 2 includes a transmission/reception portion 19, a control portion 20, and a temperature sensor 21.

In Fig. 2, suffixes "A" and "B" are added to each numeral of the two units of the indoor units 2 for identification.

Also, in Fig. 2, the case in which there are two of the indoor units 2 is shown, but not limited to that, the same configuration and operation may be applied to an arbitrary number of units.

The "operation control/schedule setting portion 13" corresponds to "operation setting means" in the present invention.

Also, the "control portion 14" corresponds to "control means" in the present invention.

Also, the "transmission/reception portion 15" corresponds to "temperature information obtainment means" in the present invention.

Also, the "schedule storage portion 16" corresponds to "storage means" in the present invention.

The schedule storage portion 16 stores setting information of the scheduled operation.

As for the setting information of the scheduled operation, selection information on the temperature sensor 21 to be detected selected among the plurality of temperature sensors 21 in accordance with at least one of time, date, and day and operation setting information including at least information on temperature setting in accordance with at least one of time, date, and day are stored.

The control portion 14 controls the operations of each of the indoor units 2 and the outdoor unit 3 on the basis of the setting information of the scheduled operation.

The operation control/schedule setting portion 13 is cnostituted by an interface (display, input key and the like) for input of the setting information of the scheduled operation including at least the above-mentioned selection information and the operation setting information and information such as the operation control to the air conditioner from an operation by a user.

The clock device 17 is constituted by an RTC (Real Time Clock), for example, and detects current time and inputs it to the control portion 14.

The transmission/reception portion 15 is constituted by a network interface and performs bilateral communication with the transmission/reception portion 19 of each of the indoor units 2 on the basis of a predetermined communication standard.

The transmission/reception portion 15 obtains at least temperature information detected by the temperature sensor 21 from each of the indoor units 2.

Also, the transmission/reception portion 15 transmits information on operation control to each of the indoor units 2 or the outdoor unit 3 from the control portion 14.

The transmission/reception portion 19 of each of the indoor units 2 is constituted by the network interface and performs bilateral communication with the transmission/reception portion 15 of the air-conditioning controller 10 based on the predetermined communication standard.

This transmission/reception portion 19 transmits the temperature information detected by the temperature sensor 21 of the indoor unit 2 to the air-conditioning controller 10.

Also, the transmission/reception portion 15 inputs the information to the operation control obtained from the air-conditioning controller 10 to the control portion 20.

The control portion 20 of each of the indoor units 2 controls an operation of each means configuring the indoor unit 2 on the basis of the control information from the air-conditioning controller 10.

Also, the control portion 20 obtains information on an indoor temperature from the temperature sensor 21.

The temperature sensor 21 disposed in each of the indoor units 2 is constituted by a thermistor, for example. The temperature sensor 21 detects an indoor temperature of a room to be air-conditioned, that is, the temperature of the space to be air-conditioned in which the indoor unit 2 is arranged.

The control portion 14, the clock device 17, and the control portion 20 can be realized by hardware such as circuit devices that realize these functions or can be also realized by software executed on a calculating device such as a microcomputer, a CPU or the like.

The schedule storage portion 16 can be constituted by a storage device such as an HDD (Hard Disk Drive), a flash memory and the like.

Subsequently, the operation of the air-conditioning controller 10 in this embodiment will be described.

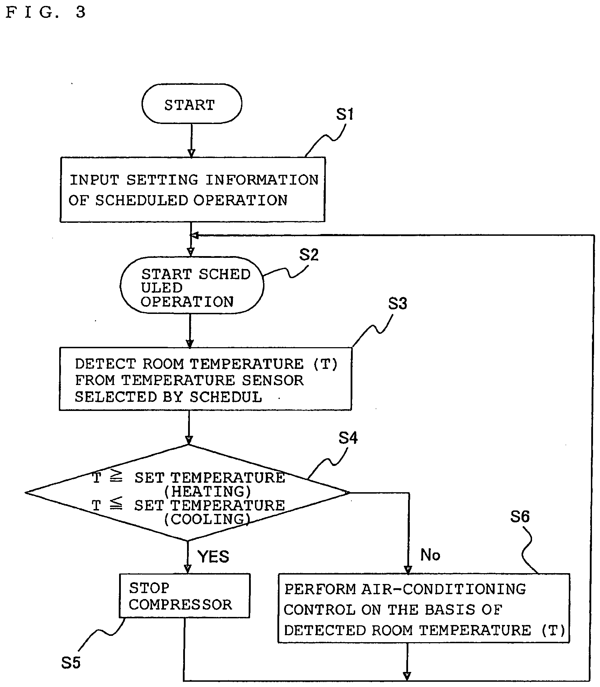

Fig. 3 is an operation flowchart of the air-conditioning controller 10 in Embodiment 1.

Each step in Fig. 3 will be described below.

### (S1)

First, a user inputs setting information of the scheduled operation by the operation control/schedule setting portion 13 so that the information is stored in the schedule storage portion 16.

As for the setting information of the scheduled operation, operation setting information and the selection information of the temperature sensor 21 are stored in accordance with at least one of time, date, and day.

As for the operation setting information, terms including start/stop (operation start or stop), an operation mode, a setting temperature, operation prohibition setting and the like of each of the indoor units 2 and the outdoor unit 3 are set, for example.

Settings of operating from 8am to 5pm and stopping for the rest of time, a cooling operation mode, a setting temperature of 28°C and the like are set, for example.

As for the selection information of the temperature sensor 21, the temperature sensor 21 to be detected among the plurality of temperature sensors 21 is selected by an identification number (address) specific to each of the indoor units 2, for example.

If the thermal load of the space to be air-conditioned in the east side in the morning (8am to 12pm) is large, for example, the temperature sensor 21 of the indoor unit 2 arranged in the east side of the space to be air-conditioned is made to be a detection target, and the identification number is set as the selection information.

If the indoor units 2 are arranged on different floors (or in different rooms), for example, the floor number or room number of each floor (or a room) may be used as the selection information.

For example, in accordance with an assumed usage state (staff, contents of work, equipment exhaust heat, used time) in each floor (or a room), the temperature sensor 21 arranged on the floor (or in the room) where the thermal load is expected to become large is detected, and the information of the floor number or room number is set as the selection information.

### (S2)

Subsequently, the control portion 14 of the air-conditioning controller 10 performs operation control of each of the indoor units 2 and the outdoor unit 3 so that the set operation state is realized at the time (or date, day) set by the operation setting information, referring to the setting information of the scheduled operation stored in the schedule storage portion 16 and the clock device 17.

### (S3)

On the other hand, each of the indoor units 2 detects the indoor temperature of the respective indoor unit 2 by using the temperature sensor 21. Then, the transmission/reception portion 19 of each of the indoor units 2 transmits the temperature information to the air-conditioning controller 10.

The air-conditioning controller 10 obtains the temperature information of the temperature sensor 21 selected at the current time (or date, day) on the basis of the selection information among each temperature information transmitted from each of the indoor units 2.

If the identification number of the indoor unit 2 is set as the selection information, for example, the temperature information transmitted from the indoor unit 2 is obtained. Alternatively, if the room number is set as the selection information, for example, the temperature information detected by the temperature sensor 21 arranged in the room is obtained.

### (S4)

Then, the control portion 14 performs the operation control of each of the indoor units 2 and the outdoor unit 3 on the basis of the temperature information obtained from the selected temperature sensor 21 and the information on the temperature setting of the operation setting information.

During the heating operation, for example, it is determined if the room temperature (T) detected by the selected temperature sensor 21 is less than the set temperature or not.

Also, during the cooling operation, it is determined if the room temperature (T) detected by the selected temperature sensor 21 is more than the set temperature or not.

### (S5)

If the condition at Step S4 is satisfied, the control portion 14 transmits a control signal to stop the compressor of the outdoor unit 3 from the transmission/reception portion 15.

### (S6)

On the other hand, if the condition at Step S4 is not satisfied, the control portion 14 continues the operation of the compressor so as to continue the operation of air conditioning by each of the indoor units 2.

As mentioned above, in this embodiment, the temperature sensor 21 to be detected is selected from the plurality of temperature sensors 21, and the plurality of air conditioners are controlled on the basis of the temperature information of the temperature sensor 21 selected on the basis of the selection information and the temperature setting information of the operation setting information.

Therefore, in accordance with at least one of the time, date, and day set in the scheduled operation, the temperature sensor 21 to be detected among the plurality of temperature sensors 21 can be arbitrarily selected on the basis of the user's setting. As a result, air conditioning control in accordance with the thermal load condition of the space to be air-conditioned can be realized, and the degree of comfort can be improved.

If the indoor units each 2 are arranged on different floors (or in different rooms), by arbitrarily selecting the position of the floor (or the room) where the temperature sensor 21 to be detected is disposed, the air conditioning in accordance with the thermal load condition of each floor (or each room) can be performed, and the degree of comfort of each floor (or each room) can be improved.

Also, by providing the operation control / schedule setting portion 13 that allows input of the setting information of the scheduled operation, the user can input the desired setting information of the scheduled operation.

### Embodiment 2

In Embodiment 2, a mode in which the present invention is applied to a hot-water supply cooling/heating system that performs radiator heating, floor heating or cooling by hot water or cold water will be described.

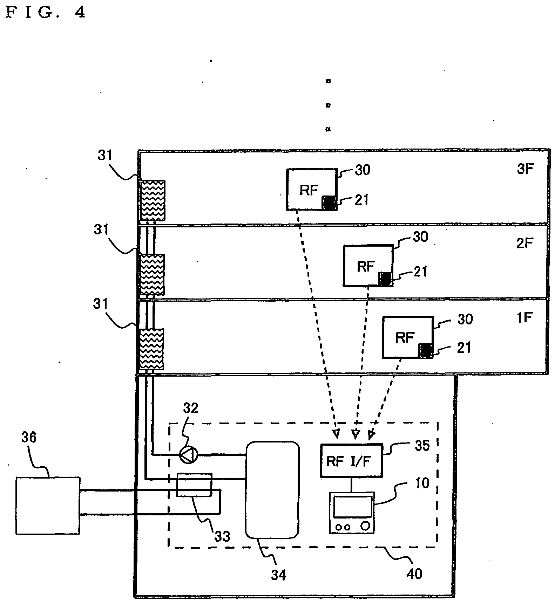

Fig. 4 is a diagram illustrating a configuration of a hot-water supply cooling/heating system in Embodiment 2.

As shown in Fig. 4, the hot-water supply cooling/heating system in Embodiment 2 includes a hot-water supply cooling/heating circuit in which a plurality of radiators 31, a pump 32, a water heat exchanger 33, a hot-water tank 34 are connected by a pipeline and hot water or cold water is circulated.

Also, the water heat exchanger 33 and the outdoor unit 36 are connected by a refrigerant pipeline, and a refrigerating cycle that absorbs/radiates heat of the refrigerant by changing the pressure of the refrigerant flowing through the refrigerant pipeline is constituted.

The "hot-water supply cooling/heating system" corresponds to the "plurality of air conditioners" in the present invention.

Also, the "radiator 31" corresponds to the "heat exchanger on the use side" in the present invention.

The outdoor unit 36 includes a compressor that compresses the refrigerant, a heat exchanger on the heat source side arranged outside the space to be air-conditioned, a fan on the outdoor unit side, an expansion valve as throttle means, a four-way valve and the like similarly to the above-mentioned Embodiment 1.

The water heat exchanger 33 performs heat exchange between the refrigerant circulating through the refrigerant circuit and water circulating in the hot-water supply cooling/heating circuit. That is, by absorbing or radiating heat of the refrigerant flowing through the refrigerant pipeline, the water circulating in the hot-water supply cooling/heating circuit is heated or cooled.

The hot-water tank 34 is for storing water circulating through the hot-water supply cooling/heating circuit.

The pump 32 is for circulating water conducting through the pipeline of the hot-water supply cooling/heating circuit. The pump 32 may be constituted by a pump capable of capacity control or the like.

A control valve or the like that controls a flow rate of the water circulating through the hot-water supply cooling/heating circuit may be provided.

The plurality of radiators 31 are, as shown in Fig. 4, arranged on each of floors, which are spaces to be air-conditioned, respectively, for example.

The radiator 31 performs heat exchange between hot water or cold water circulating through the hot-water supply cooling/heating circuit and the indoor air for air conditioning or floor heating.

Also, as shown in Fig. 4, the hot-water supply cooling/heating system includes a plurality of wireless remote controllers 30, a reception portion I/F 35, and the air-conditioning controller 10.

The configuration of the air-conditioning controller 10 is the same as the above Embodiment 1, and the same reference numerals are given to the same portions.

The plurality of wireless remote controllers 30 are arranged on each of floors, which are spaces to be air-conditioned, respectively.

The wireless remote controller 30 is capable of operation control of operation start/stop, the operation mode, the set temperature and the like of each of the radiators 31.

Also, each of the wireless remote controllers 30 is provided with the temperature sensor 21, respectively.

The configuration of the temperature sensor 21 is the same as the above Embodiment 1.

Each of the wireless remote controllers 30 transmits temperature information detected by the temperature sensor 21 to the reception portion I/F 35.

The reception portion I/F 35 is wirelessly connected to the plurality of wireless remote controllers 30 and performs bilateral communication based on the predetermined communication standard.

Then, the temperature information detected at least by the temperature sensor 21 is obtained from the plurality of wireless remote controllers 30.

The connection between the wireless remote controller 30 and the reception portion I/F 35 is not limited to the wireless connection but may be wired connection.

The pump 32, the water heat exchanger 33, the hot-water tank 34, the reception portion I/F 35, and the air-conditioning controller 10 constitute a heat exchanger unit (cylinder unit) 40 for hot-water storage.

Subsequently, the operation of the air-conditioning controller 10 in Embodiment 2 will be described mainly on differences from the above Embodiment 1 (Fig. 3).

### (S1, S2)

First, similarly to the above Embodiment 1, the user inputs the setting information of the scheduled operation. The control portion 14 of the air-conditioning controller 10 performs the operation control of the outdoor unit 36 and the pump 32 on the basis of the setting information of the scheduled operation.

As the selection information of the temperature sensor 21, the floor number or the room number of the floor (or the room) where the wireless remote controller 30 is arranged is set as the selection information, for example.

### (S3)

Each of the wireless remote controllers 30 detects the indoor temperature of the floor where the wireless remote controller 30 is arranged by the temperature sensor 21, respectively. Then, the controller transmits the temperature information to the reception portion I/F 35.

The air-conditioning controller 10 obtains the temperature information of the temperature sensor 21 selected at the current time (or date, day) on the basis of the selection information among the temperature information transmitted from the wireless remote controllers 30.

### (S4 to S6)

The control portion 14 performs the operation control of the heat exchanger unit 40 for hot-water storage and the outdoor unit 3 on the basis of the temperature information obtained from the selected temperature sensor 21 and the information on the temperature setting of the operation setting information.

For example, similarly to the above Embodiment 1, comparison is made with the set temperature in accordance with a mode of the heating operation or the cooling operation.

If the condition at Step S4 is satisfied, the operations of the compressor of the outdoor unit 3 and the pump 32 of the heat exchanger unit 40 for hot-water storage are stopped.

If the condition at Step S4 is not satisfied, the operations of the compressor and the pump 32 are continued, and the operation of the air conditioning by each of the radiators 31 is continued.

As mentioned above, in this embodiment, in the hot-water supply cooling/heating system provided with the refrigerating cycle that circulates the refrigerant and the hot-water supply cooling/heating circuit that circulates hot water or cold water, the temperature sensor 21 to be detected is selected from the plurality of temperature sensors 21, and the plurality of air conditioners are controlled on the basis of the temperature information of the temperature sensor 21 selected on the basis of the selection information and the information of the temperature setting of the operation setting information.

Therefore, the temperature sensor 21 to be detected among the plurality of temperature sensors 21 can be arbitrarily selected in accordance with at least one of time, date, and day set in the scheduled operation by the user's setting. As a result, the air-conditioning control in accordance with the thermal load condition of the space to be air-conditioned can be realized, and the degree of comfort can be improved.

In Embodiment 2, the case in which the plurality of wireless remote controllers 30 are arranged on different floors (spaces to be air-conditioned), respectively, is described, but the present invention is not limited to that. It may also be so constituted that at least some of the plurality of radiators 31 are arranged on different floors and the wireless remote controllers 30 are disposed in each of these radiators 31, for example.

## Claims

1. An air conditioner controller that controls a plurality of air conditioners (2,3), each provided with a temperature sensor (21) that detects a temperature of a space to be air-conditioned, comprising:
a temperature information obtaining portion (15) that obtains temperature information detected by each of said temperature sensors (21);
a storage portion (16) that stores setting information of a scheduled operation; and
a control portion (14) that controls an operation of said air conditioner on the basis of setting information of said scheduled operation, **characterised in that**
said air conditioners (2, 3) are subjected to operation control by wireless remote controllers (30) arranged in spaces to be air-conditioned, respectively,
said temperature sensors (21) are provided in said wireless remote controllers (30), respectively,
said storage portion (16) stores, as said setting information of the scheduled operation,
selection information on a temperature sensor to be detected selected from said plurality of temperature sensors (21) in accordance with at least one of time, date, and day; and
operation setting information including at least information on a temperature setting in accordance with at least one of time, date, and day; and
said control portion (14) controls said plurality of air conditioners on the basis of the temperature information of the temperature sensor (21) selected from said plurality of temperature sensors (21) on the basis of said selection information and the information on temperature setting of said operation setting information.

2. The air conditioner controller of claim 1, wherein
at least some of said plurality of air conditioners (2,3) are arranged in different spaces to be air-conditioned; and
said storage portion (16) stores information that identifies the space to be air-conditioned where said temperature sensors (21) is arranged as said selection information.

3. The air conditioner controller of claim 1 or 2, wherein
said plurality of air conditioners (2,3) are arranged in different spaces to be air-conditioned, respectively; and
said storage portion (16) stores information that identifies the space to be air-conditioned where said temperature sensors (21) is arranged as said selection information.

4. The air conditioner controller of any one of claims 1 to 3, further comprising
an operation setting portion (13) that allows input of said setting information of the scheduled operation.

5. The air conditioner controller of any one of claims 1 to 4, wherein
said plurality of air conditioners each includes:
a refrigerating cycle that sequentially connects a compressor that compresses refrigerant, a heat exchanger on a heat source side arranged outside the space to be air-conditioned, a throttling portion, and a plurality of heat exchangers on a usage side arranged within the space to be air-conditioned, and circulates the refrigerant; and
said temperature sensor (21) is disposed in each of said heat exchangers on the usage side.

6. The air conditioner controller of any one of claims 1 to 4, wherein
said plurality of air conditioners each includes:
a refrigerating cycle that sequentially connects a compressor that compresses refrigerant, a heat exchanger on a heat source side arranged outside the space to be air-conditioned, a throttling portion, and a water-heat exchanger (33) that performs heat exchange between the refrigerant and water, and circulates the refrigerant; and
a hot-water supply cooling / heating circuit that connects said water-heat exchanger (33), a pump (32), a hot-water tank (34), and a plurality of heat exchangers (31) on a usage side arranged within the space to be air-conditioned by piping, and circulates hot water or cold water; and
said temperature sensor (21) is disposed in each of said heat exchangers (31) on the usage side.

## Patentansprüche

1. Eine Klimagerätsteuereinheit, die eine Vielzahl von Klimageräten (2, 3) steuert, von denen jedes mit einem Temperatursensor (21) versehen ist, der eine Temperatur eines zu klimatisierenden Raumes detektiert, aufweisend:
eine Temperaturinformationserlangungseinheit (15), die Temperaturinformationen, die jeweils von jedem der genannten Temperatursensoren (21) detektiert sind, erhält;
eine Speichereinheit (16), die eine Einstellungsinformation eines geplanten Betriebs speichert;
eine Steuereinheit (14), die einen Betrieb des genannten Klimageräts auf der Basis der Einstellungsinformation der genannten geplanten Operation steuert, **dadurch gekennzeichnet, dass**
die genannten Klimageräte (2, 3), die jeweils in den zu klimatisierenden Räumen angeordnet sind, einer Betriebskontrolle durch kabellose Fernsteuerungen (13) ausgesetzt sind,
die genannten Temperatursensoren (21) jeweils in den genannten kabellosen Fernsteuerungen (30) vorgesehen sind,
die genannte Speichereinheit (16) als die genannte Einstellungsinformation des geplanten Betriebs eine Auswahlinformation auf einem zu ermittelnden Temperatursensor speichert, der ausgewählt ist aus der Mehrzahl von Temperatursensoren (21) in Übereinstimmung mit zumindest Zeit, Datum, und/oder Tag; und
eine Betriebseinstellungsinformation zumindest eine Information über eine Temperatureinstellung in Übereinstimmung mit zumindest Zeit, Datum, und/oder Tag umfasst; und
die genannte Steuereinheit (14) die genannte Mehrzahl von Klimageräten auf der Basis der Temperaturinformationen der Temperatursensoren (21), die ausgewählt sind aus der Mehrzahl von Temperatursensoren (21), auf der Basis der genannten Auswahlinformation und der Information über die Temperatureinstellung der genannten Betriebseinstellungsinformation steuert.

2. Die Klimagerätsteuereinheit nach Anspruch 1, wobei zumindest einige der genannten Mehrzahl von Klimageräten (2, 3) in verschiedenen zu klimatisierenden Räumen angeordnet sind; und
die genannten Speichereinheit (16) eine Information als die genannte Auswahlinformation speichert, die den zu klimatisierenden Raum kennzeichnet, in dem die genannten Temperatursensoren (21) angeordnet sind.

3. Die Klimagerätsteuereinheit nach Anspruch 1 oder 2, wobei
die genannte Mehrzahl von Klimageräten (2, 3) jeweils in verschiedenen zu klimatisierenden Räumen angeordnet sind; und
die genannte Speichereinheit (16) eine Information als die genannte Auswahlinformation speichert, die den zu klimatisierenden Raum kennzeichnet, in dem die genannten Temperatursensoren (21) angeordnet sind.

4. Die Klimagerätsteuereinheit nach einem der Ansprüche 1 bis 3, weiter aufweisend
eine Betriebseinstellungseinheit (13), die eine Eingabe der genannten Einstellungsinformation des geplanten Betriebs ermöglicht.

5. Die Klimagerätsteuereinheit nach einem der Ansprüche 1 bis 4, wobei
die genannte Mehrzahl von Klimageräten jeweils aufweist:
einen Kältekreislauf, der aufeinanderfolgend einen Kompressor, der ein Kühlmittel komprimiert, einen Wärmetauscher, der auf einer Wärmequellenseite außerhalb des zu klimatisierenden Raums angeordnet ist, eine Drosseleinheit und eine Mehrzahl von Wärmetauschern auf einer Nutzungsseite, die in dem zu klimatisierenden Raum angeordnet sind, verbindet und das Kühlmittel zirkuliert; und
der genannte Temperatursensor (21) in jedem der genannten Wärmetauscher auf der Nutzungsseite angeordnet ist.

6. Die Klimagerätsteuereinheit nach einem der Ansprüche 1 bis 4, wobei die genannte Mehrzahl von Klimageräten jeweils aufweist:
einen Kühlkreislauf der aufeinanderfolgend einen Kompressor, der ein Kühlmittel komprimiert, einen Wärmetauscher auf einer Wärmequellenseite, der außerhalb des zu klimatisierenden Raums angeordnet ist, eine Drosselportion und einen Wasserwärmetauscher (33), der einen Wärmeaustausch zwischen dem Kühlmittel und Wasser durchführt, miteinander verbindet und das Kühlmittel zirkuliert; und
einen Heißwasserversorgungskühl-/Heißwasserversorgungserhitzungskreislauf, der den genannten Wasserwärmetauscher (33), eine Pumpe (32), einen Heißwassertank (34) und eine Mehrzahl von Wärmetauschern (31) auf einer Nutzungsseite, die in dem zu klimatisierenden Raum angeordnet sind, durch ein Leitungssystem verbindet und heißes Wasser oder kaltes Wasser zirkuliert; und der genannte Temperatursensor (21) in jedem der genannten Wärmetauscher (31) auf der Nutzungsseite angeordnet ist.

## Revendications

1. Contrôleur de climatiseur qui commande une pluralité de climatiseurs (2, 3), chacun d'eux étant doté d'un détecteur de température (21) qui détecte la température d'un espace à climatiser, comprenant :
une partie obtention d'informations de la température (15) qui permet d'obtenir des informations de la température détectée par chacun desdits détecteurs de température (21) ;
une partie stockage (16) qui stocke des informations de consigne d'un fonctionnement planifié ; et
une partie commande (14) qui commande le fonctionnement dudit climatiseur sur la base des informations de consigne dudit fonctionnement planifié, **caractérisé en ce que** :
lesdits climatiseurs (2, 3) sont soumis à une commande de fonctionnement par des contrôleurs distance sans fil (30) agencés dans des espaces à climatiser, respectivement ;
lesdits détecteurs de température (21) sont disposés dans lesdits contrôleurs à distance sans fil (30), respectivement ;
ladite partie stockage (16) stocke, en tant que dites informations de consigne du fonctionnement planifié :
des informations de sélection qui se rapportent à un détecteur de température à détecter, sélectionné parmi ladite pluralité de détecteurs de température (21) selon l'un au moins de l'heure, de la date, et du jour ; et
des informations de consigne de fonctionnement qui comprennent au moins des informations qui se rapportent à une consigne de température selon l'un au moins de l'heure, de la date, et du jour ; et
ladite partie commande (14) commande ladite pluralité de climatiseurs sur la base des informations de température du détecteur de température (21) sélectionné parmi ladite pluralité de détecteurs de température (21) sur la base desdites informations de sélection, et desdites informations qui se rapportent à la consigne de température desdites informations de consigne de fonctionnement.

2. Contrôleur de climatiseur selon la revendication 1, dans lequel :
certains au moins de ladite pluralité de climatiseurs (2, 3) sont agencés dans des espaces différents à climatiser ; et
ladite partie stockage (16) stocke des informations qui identifient l'espace à climatiser où sont disposés lesdits détecteurs de température (21), en tant que dites informations de sélection.

3. Contrôleur de climatiseur selon la revendication 1 ou la revendication 2, dans lequel :
ladite pluralité de climatiseurs (2, 3) sont agencés dans des espaces différents à climatiser, respectivement ; et
ladite partie stockage (16) stocke des informations qui identifient l'espace à climatiser où sont disposés lesdits détecteurs de température (21), en tant que dites informations de sélection.

4. Contrôleur de climatiseur selon l'une quelconque des revendications 1 à 3, comprenant en outre :
une partie consigne de fonctionnement (13) qui permet d'entrer lesdites informations de consigne du fonctionnement planifié.

5. Contrôleur de climatiseur selon l'une quelconque des revendications 1 à 4, dans lequel :
chacun de ladite pluralité de climatiseurs comprend :
un cycle de réfrigération qui connecte de manière séquentielle un compresseur qui comprime un fluide frigorigène, un échangeur de chaleur du côté source de chaleur agencé à l'extérieur de l'espace à climatiser, une partie étranglement, et une pluralité d'échangeurs de chaleur du côté utilisation agencés à l'intérieur de l'espace à climatiser, et qui fait circuler le fluide frigorigène ; et
ledit détecteur de température (21) est disposé dans chacun desdits échangeurs de chaleur du côté utilisation.

6. Contrôleur de climatiseur selon l'une quelconque des revendications 1 à 4, dans lequel :
chacun de ladite pluralité de climatiseurs comprend :
un cycle de réfrigération qui connecte de manière séquentielle un compresseur qui comprime un fluide frigorigène, un échangeur de chaleur du côté source de chaleur agencé à l'extérieur de l'espace à climatiser, une partie étranglement, et un échangeur de chaleur avec de l'eau (33) qui procède à un échange de chaleur entre le fluide frigorigène et l'eau, et qui fait circuler le fluide frigorigène ; et
un circuit de refroidissement / de chauffage d'approvisionnement en eau chaude qui connecte ledit échangeur de chaleur avec de l'eau (33), une pompe (32), un réservoir d'eau chaude (34), et une pluralité d'échangeurs de chaleur (31) du côté utilisation, agencés à l'intérieur de l'espace à climatiser grâce à une tuyauterie, et qui fait circuler de l'eau chaude ou de l'eau froide ; et
ledit détecteur de température (21) est disposé dans chacun desdits échangeurs de chaleur (31) du côté utilisation.
